(19) Europäisches Patentamt / European Patent Office / Office européen des brevets

(11) **EP 3 992 335 A1**

(12) **EUROPEAN PATENT APPLICATION**
published in accordance with Art. 153(4) EPC

(43) Date of publication:
**04.05.2022 Bulletin 2022/18**

(21) Application number: **20833360.9**

(22) Date of filing: **04.06.2020**

(51) International Patent Classification (IPC):
***D01F 8/14*** *(2006.01)*

(52) Cooperative Patent Classification (CPC):
**D01F 8/14**

(86) International application number:
**PCT/JP2020/022040**

(87) International publication number:
**WO 2020/261914 (30.12.2020 Gazette 2020/53)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **27.06.2019  JP 2019119808**

(71) Applicant: **Kuraray Co., Ltd.
Kurashiki-shi, Okayama 710-0801 (JP)**

(72) Inventors:
• **ONOGI, Shoji**
  **Osaka-shi, Osaka 530-8611 (JP)**
• **YAMASAKI, Kohei**
  **Kurashiki-shi, Okayama 713-8550 (JP)**
• **NAKATSUKA, Hitoshi**
  **Saijo-shi, Ehime 793-8585 (JP)**

(74) Representative: **Müller-Boré & Partner
Patentanwälte PartG mbB
Friedenheimer Brücke 21
80639 München (DE)**

(54) **ELECTROCONDUCTIVE COMPOSITE FIBERS AND FIBER STRUCTURE USING SAME**

(57)     Provided is an electroconductive composite fiber having excellent antistatic capability and cationic dyability as well as a fiber structure including the same. The electroconductive composite fiber at least includes an electroconductive layer and a non-electroconductive layer disposed in contact with the electroconductive layer, wherein the electroconductive layer contains an electroconductive substance, and the non-electroconductive layer contains a modified polyester comprising a phosphonium-containing dicarboxylic acid component as a copolymerization component. For example, the copolymerization component of the modified polyester may be a dicarboxylic acid component containing a phosphonium sulfonate group.

Fig. 1

**Description**

CROSS REFERENCE TO THE RELATED APPLICATION

This application is based on and claims Convention priority to Japanese patent application No. 2019-119808, filed June 27, 2019, the entire disclosure of which is herein incorporated by reference as a part of this application.

BACKGROUND OF THE INVENTION

Field of the Invention

The present invention relates to an electroconductive composite fiber having excellent antistatic capability and cationic dyability and a fiber structure including the same.

Description of Related Art

In the fields of workwear, cleanroom clothing and the like, it has been typical to use fabrics including, at certain intervals, electroconductive threads containing an electroconductive carbon black and/or titanium oxide particles coated with an electroconductive material in order to secure safety of workers by preventing the accumulation of static charges on fabrics and suppress damage to products due to static electricity. In such cases, where a fabric includes fibers having cationic dye dyeability, such as aramid fibers which are often used in e.g. work clothing and protective clothing and acrylic fibers which are used in e.g. sweaters and fleeces, the electroconductive threads in the fabrics are not dyed in cationic dyeing, causing the problem that the electroconductive threads stand out from the fabric and thus deteriorate the design.

In order to solve the problem, for example, Patent Document 1 (JP Laid-open Patent Publication No. H9-31747) proposes an acrylic fiber having excellent conductivity which is characterized in that a mixture including carbon black and a vinyl-based polymer copolymerized with 30 wt% or more of methyl methacrylate forms at least one region of 0.01 to 100 $\mu m^2$ in a fiber cross section in order to impart electroconductivity to the acrylic fiber having alkaline dye dyeability.

Patent Document 2 (JP Laid-open Patent Publication No. 2010-59589) proposes, as an electroconductive fiber capable of being dyed with a cationic dye under a same condition as that for an acrylic fiber, an electroconductive composite fiber including a non-electroconductive layer and an electroconductive layer, in which the non-electroconductive layer covers at least 70% of a fiber surface, the non-electroconductive layer includes a polyester obtained by copolymerization of polyalkylene glycol and an isophthalic acid containing a metal sulfonate group, and the electroconductive layer includes a thermoplastic polymer containing titanium oxide particles coated with an electroconductive material.

CONVENTIONAL ART DOCUMENT

PATENT DOCUMENT

[Patent Document 1] JP Laid-open Patent Publication No. H9-31747
[Patent Document 2] JP Laid-open Patent Publication No. 2010-59589

SUMMARY OF THE INVENTION

Patent Document 1, however, does not fit for the fields where high antistatic capability is required (for example, cleanroom clothing for use in semiconductor manufacturing) because the method of producing the acrylic fiber is very cumbersome and because voids which are generated upon removal of a solvent may affect the electroconductivity.

Patent Document 2 limits the non-electroconductive layer to the polyester obtained by copolymerization of polyalkylene glycol and an isophthalic acid containing a metal sulfonate group. Since it is generally difficult to increase the degree of polymerization of a polyester modified with a metal sulfonate group, the polyester has poor fibro-genetic property and thus makes it difficult to spin fibers. Further, a resultant electroconductive fiber cannot have sufficient electroconductivity for use in the field of workwear including cleanroom clothing which is required to have high antistatic capability. Therefore, there is still a need for electroconductive fibers with enhanced electroconductivity.

In order to solve the above problem, an object of the present invention is to provide an electroconductive composite fiber having good cationic dyability and high antistatic capability.

The inventors of the present invention have made intensive studies in order to achieve the object and finally found that in a composite fiber at least comprising an electroconductive layer and a non-electroconductive layer disposed in contact with the electroconductive layer, where the non-electroconductive layer comprises a modified polyester including a phosphonium-containing dicarboxylic acid component as a copolymerization component, the non-electroconductive layer exhibits sufficient cationic dyability. The inventors further found that surprisingly, a specific modified polyester which is used to impart cationic dye dyeability can improve the electroconductivity presumably because the modified polyester also affects the electroconductive layer disposed in contact with the non-electroconductive layer containing the modified polyester, and the inventors thus achieved the present invention.

That is, the present invention may include the following preferred aspects.

Aspect 1

An electroconductive composite fiber at least comprising an electroconductive layer (part) and a non-electroconductive layer (part) disposed in contact with the electroconductive layer,

wherein the electroconductive layer contains an electroconductive substance, and
the non-electroconductive layer contains a modified polyester comprising a phosphonium-containing dicarboxylic acid component as a copolymerization (copolymerizable) component.

Aspect 2

The electroconductive composite fiber according to aspect 1, wherein the copolymerization component of the modified polyester is a dicarboxylic acid component containing a phosphonium sulfonate group.

Aspect 3

The electroconductive composite fiber according to aspect 2, wherein the copolymerization component of the modified polyester is a phosphonium sulfoisophthalate component.

Aspect 4

The electroconductive composite fiber according to any one of aspects 1 to 3, wherein the modified polyester contains the phosphonium-containing dicarboxylic acid component as the copolymerization component in a proportion of from 1.0 to 3.5 mol% (preferably from 1.2 to 3.0 mol%, and more preferably from 1.5 to 2.5 mol%).

Aspect 5

The electroconductive composite fiber according to any one of aspects 1 to 4, wherein the modified polyester has an intrinsic viscosity of from 0.6 to 0.8 (preferably from 0.63 to 0.75, and more preferably from 0.65 to 0.7).

Aspect 6

The electroconductive composite fiber according to any one of aspects 1 to 5, wherein the electroconductive substance is an electroconductive carbon black or titanium oxide particles which are coated with an electroconductive material.

Aspect 7

The electroconductive composite fiber according to aspect 6, wherein the electroconductive layer contains the electroconductive carbon black in a proportion of from 20 to 40 wt% (preferably from 25 to 38 wt%, and more preferably from 25 to 35 wt%) and a thermoplastic resin, and
a weight ratio of the electroconductive layer to the non-electroconductive layer falls within a range of from 0.5:99.5 to 10:90 (preferably from 1:99 to 5:95, more preferably from 1.5:98.5 to 4:96, and further preferably from 2:98 to 3.5:96.5).

Aspect 8

The electroconductive composite fiber according to aspect 6, wherein the electroconductive layer contains the titanium oxide particles which are coated with the electroconductive material in a proportion of from 30 to 85 wt% (preferably from 50 to 80 wt%, and more preferably from 65 to 75 wt%) and a thermoplastic resin, and
a weight ratio of the electroconductive layer to the non-electroconductive layer falls within a range of from 3:97 to 50:50 (preferably from 5:95 to 40:60, and more preferably from 10:90 to 30:70).

Aspect 9

The electroconductive composite fiber according to any one of aspects 6 to 8, wherein the electroconductive layer contains the electroconductive substance and a thermoplastic resin, and
the thermoplastic resin is a thermoplastic polyamide or a thermoplastic polyolefin.

Aspect 10

A fiber structure comprising electroconductive composite fibers as recited in any one of aspects 1 to 9 in at least a part of the fiber structure.
The present invention encompasses any combination of at least two features disclosed in the claims and/or the specification and/or the drawings. In particular, any combination of two or more of the appended claims should be equally construed as included within the scope of the present invention.

EFFECTS OF THE INVENTION

According to the present invention, it is possible to provide electroconductive composite fiber having excellent antistatic capability and cationic dyability.

BRIEF DESCRIPTION OF THE DRAWINGS

The present invention will be more clearly understood from the following description of preferred examples thereof, when taken in conjunction with the accompanying drawings. However, the examples and the drawings are given only for the purpose of illustration and explanation, and are not to be taken as limiting the scope of the present invention in any way whatsoever, which scope is to be determined by the appended claims. In the figures,

Fig. 1 is a schematic cross-sectional view of an electroconductive composite fiber according to an embodiment of the present invention which has a core-sheath structure enclosing a single core;
Fig. 2 is a schematic cross-sectional view of an electroconductive composite fiber according to an embodiment of the present invention which has a core-sheath structure enclosing four cores;
Fig. 3 is a schematic cross-sectional view of an electroconductive composite fiber according to an embodiment of the present invention which has a core-sheath structure including three layers;
Fig. 4 is a schematic cross-sectional view of an electroconductive composite fiber according to an embodiment of the present invention which has a structure including two exposed cores;
Fig. 5 is a schematic cross-sectional view of mixed fibers including an electroconductive composite fiber according to an embodiment of the present invention which has a core-sheath structure enclosing a single core; and
Fig. 6 is a schematic cross-sectional view of mixed fibers including an electroconductive composite fiber according to an embodiment of the present invention which has a core-sheath structure including two exposed cores.

DESCRIPTION OF THE EMBODIMENTS

Hereinafter, the present invention will be described in detail with reference to the embodiments. However, the scope of the present invention will not be limited to the embodiments as described herein, and various modifications may be made without departing from the scope of the invention.
In the electroconductive composite fiber according to the present invention, it is important that the electroconductive layer contains an electroconductive substance. The electroconductive substance may be any known electroconductive substance, and examples of the substance may include an electroconductive carbon black and inorganic particles coated with an electroconductive material. The type of electroconductive carbon black is not limited to a particular one, and examples thereof may include channel black, furnace black, acetylene black, ketjen black, and thermal black. For example, it is preferable to use furnace black or ketjen black in terms of versatility. Examples of the inorganic particles on which electroconductive coatings are applied may include inorganic particles of titanium oxide, magnesium oxide, lead oxide, calcium oxide, zinc carbonate, calcium carbonate, barium sulfate, alumina, and silica, and titanium oxide particles may preferably be used. Examples of the electroconductive coatings on the inorganic particles (preferably titanium oxide particles) may include metal oxides such as copper oxide, silver oxide, zinc oxide, cadmium oxide, tin oxide, lead oxide, manganese oxide, indium oxide, tungsten oxide, and niobium oxide. The electroconductive coatings may be added with a secondary component, and examples of the secondary component in the electroconductive coatings may include oxides of metals different from metal species of the above-mentioned metal oxides, as well as metals the same as or different from metal species of the above-mentioned metal oxides. For example, it is preferable to include copper oxide / copper, zinc oxide / aluminum oxide, tin oxide / antimony oxide, zinc oxide / zinc, aluminum oxide / aluminum, tin oxide / tin, antimony oxide / antimony, and a partially reduced material thereof.

The electroconductive coatings may be formed, for example, by vacuum deposition, or by applying and sintering a metal compound to obtain an oxide, or by partially reducing the oxide.

In order to improve the electroconductivity of the electroconductive composite fiber, the electroconductive substance in the present invention may preferably have, in a powder form, a specific resistance of $10^4$ $\Omega\cdot$cm (order) or lower, more preferably $10^3$ $\Omega\cdot$cm (order) or lower, and further preferably $10^2$ $\Omega\cdot$ cm (order) or lower.

To determine a specific resistance of the electroconductive substance, a sample (10 g) is packed into a cylinder having a diameter of 1 cm, and a direct current (0.1 to 100 V) is applied with by a pressure of 200 kg applied from above using a piston.

The electroconductive substance may preferably have an average particle size of 1 $\mu$m or smaller in terms of spinnability and electroconductivity. The average particle size may more preferably be 0.7 $\mu$m or smaller, and further preferably 0.5 $\mu$m or smaller. Particles having a smaller average particle size have better dispersivity in a resin when mixed with the resin, the mixture has greater electroconductivity. Although there is no specific lower limit for the average particle size, particles having an average particle size of 0.01 $\mu$m or larger are preferably used. In the present specification, the average particle size means a primary particle diameter and is determined using a centrifugal automatic particle-size distribution analyzer CAPA-500 manufactured by HORIBA, Ltd.

In the present invention, the electroconductive layer may preferably include the electroconductive substance and a resin which is mixed with the electroconductive substance to form the electroconductive layer. The resin which is mixed with the electroconductive substance to form the electroconductive layer (i.e., the resin of the electroconductive layer) may be any known thermoplastic resin. The resin may preferably be a (meltspinnable) thermoplastic resin which takes a fibrous form when melt-spun, and examples of such a resin may include polyamide, polyester, polyolefin, and polycarbonate. Among them, polyamide (such as nylon-6) and polyolefin (such as low molecular weight polyethylene) are preferable in that they are highly compatible with inorganic fine particles and can be added at a high concentration, making it possible to further improve the electroconductivity of the fiber.

In the present invention, where an electroconductive carbon black is used as the electroconductive substance, a content of the electroconductive carbon black based on a total weight of the electroconductive layer may preferably fall within a range of from 20 to 40 wt%. Where the content of the electroconductive carbon black is below the lower limit, the objective electroconductivity may not be obtained, so that the fiber may not exhibit sufficient antistatic capability. On the other hand, where the content exceeds the upper limit, the electroconductivity cannot be improved further, while rather the resin containing the electroconductive carbon black may have reduced fluidity, leading to deterioration of spinnability (fiber forming property). The content of the electroconductive carbon black may more preferably fall within a range of from 25 to 38 wt%, and further preferably from 25 to 35 wt%.

Where inorganic particles (in particular, titanium oxide particles) coated with an electroconductive material are used as the electroconductive substance, a content of the inorganic particles (in particular, titanium oxide particles) coated with the electroconductive material based on a total weight of the electroconductive layer may preferably fall within a range of from 30 to 85 wt%. Where the content of the titanium oxide particles coated with the electroconductive material is below the lower limit, the objective electroconductivity may not be obtained, so that the fiber may not exhibit sufficient antistatic capability. On the other hand, where the content exceeds the upper limit, the electroconductivity cannot be improved further, while rather the resin containing the titanium oxide particles coated with the electroconductive material may have reduced fluidity, leading to deterioration of spinnability (fiber forming property). The content of the titanium oxide particles coated with the electroconductive material may more preferably fall within a range of from 50 to 80 wt%, and further preferably from 65 to 75 wt%.

In the electroconductive composite fiber according to the present invention, where the electroconductive layer contains the electroconductive carbon black, a weight ratio of the electroconductive layer to the non-electroconductive layer (electroconductive layer : non-electroconductive layer) may fall within a range of from 0.5:99.5 to 10:90, and preferably from 1:99 to 5:95. Where the weight ratio of the electroconductive layer to the non-electroconductive layer is below the lower limit, the fiber may have insufficient electroconductivity. Where the ratio exceeds the upper limit, color development upon cationic dyeing may be deteriorated due to black color of the carbon black, and fiber-genetic property upon spinning may also be deteriorated. The ratio of the electroconductive layer to the non-electroconductive layer may more preferably fall within a range of from 1.5:98.5 to 4:96, and further preferably from 2:98 to 3.5:96.5.

Where the electroconductive layer contains the inorganic particles (in particular, titanium oxide particles) coated with the electroconductive material, a weight ratio of the electroconductive layer to the non-electroconductive layer (electroconductive layer : non-electroconductive layer) may fall within a range of from 3:97 to 50:50. Where the ratio is below the lower limit, the fiber may have insufficient electroconductivity. Where the ratio exceeds the upper limit, fibrogenetic property upon spinning may be deteriorated. The ratio of the electroconductive layer to the non-electroconductive layer may more preferably fall within a range of from 5:95 to 40:60, and further preferably from 10:90 to 30:70.

It is important that the modified polyester in the non-electroconductive layer of the electroconductive composite fiber according to the present invention contains phosphonium as a modifying function in a dicarboxylic acid component. Phosphonium as a modifying function in a dicarboxylic acid component may be contained as a phosphonium salt of an organic acid (e.g., sulfonic acid, carboxylic acid). Phosphonium may be contained in the form of $P^+R_1R_2R_3R_4$ (wherein $R_1$, $R_2$, $R_3$, and $R_4$ may be the same as or different from each other and be selected from a group consisting of a hydrogen atom, an alkyl group and an aryl group). The phosphonium-containing dicarboxylic acid component may preferably be a dicarboxylic acid component containing a phosphonium sulfonate group, and examples thereof may include a phosphonium sulfoisophthalate component, a phosphonium sulfodicarboxynaphthalene component, and a phosphonium sulfosuccinate component. Among them, a phosphonium sulfoisophthalate component is preferred. Incorporation of the modified polyester in the non-electroconductive layer makes it possible to impart cationic dye dyeability to the electroconductive composite fiber. Besides, incorporation of the modified polyester in the non-electroconductive layer also makes it possible to improve the electroconductivity of the electroconductive composite fiber. Although it has not been clearly figured out why the electroconductivity of the electroconductive composite fiber is improved, presumably, the following mechanism could explain the reason. First, the modified polyester can improve the degree of polymerization. The reason why incorporation of the phosphonium-containing dicarboxylic acid component can improve the degree of polymerization may be explained as follows. Known and widely used cation-modified species of polyesters include an isophthalic acid containing a metal sulfonate group (metal sulfoisophthalate). Where a metal sulfonate group is contained, generally, molecular chains are pseudo-crosslinked due to coordination to a metal upon condensation, which causes thickening of the resin, so that the degree of polymerization does not increase. For this reason, there is little entanglement among molecules, which not only results in unsatisfactory high-speed spinnability but also makes it difficult to increase the intrinsic viscosity. In contrast, where the metal sulfonate group is changed to the phosphonium sulfonate group, the above influence can be suppressed, and the degree of polymerization can be improved. Consequently, as described later, and thanks to the enhanced degree of polymerization of the modified polyester, it is possible to concentrate the stress applied during spinning and/or drawing onto the non-electroconductive layer containing the modified polyester. As a result, presumably because the crystallization of the electroconductive layer can be suppressed by mitigation of the stress to the electroconductive layer, the high-speed spinnability of the electroconductive composite fiber can be enhanced, and the intrinsic viscosity and thereby the electroconductivity can be increased.

Examples of monomers forming dicarboxylic acid components containing a phosphonium sulfonate group may include: tetrabutylphosphonium 3,5-dicarboxybenzenesulfonate; ethyltributylphosphonium 3,5-dicarboxybenzenesulfonate; benzyltributylphosphonium 3,5-dicarboxybenzenesulfonate; phenyltributylphosphonium 3,5-dicarboxybenzenesulfonate; tetraphenylphosphonium 3,5-dicarboxybenzenesulfonate; butyltriphenylphosphonium 3,5-dicarboxybenzenesulfonate; benzyltriphenylphosphonium 3,5-dicarboxybenzenesulfonate; tetrabutylphosphonium 3,5-dicarbomethoxybenzenesulfonate; ethyltributylphosphonium 3,5-dicarbomethoxybenzenesulfonate; benzyltributylphosphonium 3,5-dicarbomethoxybenzenesulfonate; phenyltributylphosphonium 3,5-dicarbomethoxybenzenesulfonate; tetraphenylphosphonium 3,5-dicarbomethoxybenzenesulfonate; ethyltriphenylphosphonium 3,5-dicarbomethoxybenzenesulfonate; butyltriphenylphosphonium 3,5-dicarbomethoxybenzenesulfonate; benzyltriphenylphosphonium 3,5-dicarbomethoxybenzenesulfonate; tetrabutylphosphonium 3,5-di-($\beta$-hydroxyethoxycarbonyl)benzenesulfonate; tetraphenylphosphonium 3,5-di-($\beta$-hydroxyethoxycarbonyl)benzenesulfonate; tetrabutylphosphonium 2,6-dicarboxynaphthalene-4-sulfonate; and $\alpha$-tetrabutyl phosphonium sulfosuccinate. The monomers forming dicarboxylic acid components containing a phosphonium sulfonate group may be used singly or in combination of two or more monomers.

No particular restriction is imposed on other components than the phosphonium-containing dicarboxylic acid component, which is a modifying component to generate the modified polyester, in the non-electroconductive layer of the electroconductive composite fiber as long as such other components are known as constituting components of polyesters. Examples of monomers forming dicarboxylic acid components may include: aromatic dicarboxylic acids such as terephthalic acid, isophthalic acid, 2,6-naphthalenedicarboxylic acid, and 4,4'-biphenyldicarboxylic acid; and aliphatic dicarboxylic acids such as azelaic acid and sebacic acid. Further, examples of monomers forming diol components may include: aliphatic diols such as ethylene glycol, diethylene glycol, propylene glycol, 1,4-butanediol, polyethylene glycol and polytetramethylene glycol; aromatic diols such as ethylene oxide adducts of bisphenol A or bisphenol S; and alicyclic diols such as cyclohexanedimethanol. These monomers may be used singly or in combination of two or more monomers.

A copolymerization amount of the phosphonium-containing dicarboxylic acid component based on the total dicarboxylic acid component of the modified polyester may preferably fall within a range of from 1.0 to 3.5 mol%. Where the copolymerization amount is below the lower limit, a clear and favorable color tone may not be obtained in dyeing with a cationic dye. On the other hand, where the copolymerization amount exceeds the upper limit, the resin may significantly thickened, making it difficult to spin the resin, and a cationic dye may excessively adheres to the fiber due to the increased number of dye adhesion seats for the cationic dye, causing deterioration of clarity of a color tone on the contrary. The copolymerization amount of the phosphonium-containing dicarboxylic acid component based on the total dicarboxylic acid component of the modified polyester may more preferably fall within a range of from 1.2 to 3.0 mol%, and further preferably from 1.5 to 2.5 mol%.

As a constituent component of the modified polyester in the non-electroconductive layer of the electroconductive composite fiber according to the present invention, adipic acid, cyclohexanedicarboxylic acid, or the like may further be used as a dicarboxylic acid for modifying the polyester. Copolymerization of these components makes it possible to provide an amorphous portion in the internal structure of the fiber, which thus enables atmospheric pressure dyeing. In addition, since the melting point is lowered, the nozzle temperature in a spinning process can be lowered, so that it is possible to suppress deterioration of the electroconductive layer and to reduce the number of fiber breakage.

The modified polyester in the non-electroconductive layer may preferably have an intrinsic viscosity of from 0.6 to 0.8. Where the intrinsic viscosity of the modified polyester in the non-electroconductive layer is below the lower limit, the electroconductivity of the electroconductive composite fiber may be lowered. On the other hand, where the intrinsic viscosity exceeds the upper limit, the viscosity may be increased exceedingly, so that fibro-genetic property may be deteriorated. The intrinsic viscosity of the modified polyester may more preferably be from 0.63 to 0.75, and further preferably from 0.65 to 0.7.

Although not yet proven at this time, the following description theoretically explains why the modified polyester in the non-electroconductive layer affects the electroconductivity of the electroconductive composite fiber. That is to say, the electroconductivity of the electroconductive composite fiber is affected by the crystallinity of the electroconductive layer; as the stress acts on the electroconductive layer while the fiber is drawn immediately below a nozzle in high-speed spinning, oriented crystallization proceeds, and crystals break the structure of the electroconductive substance, deteriorating the electroconductivity. Reversely, in order to improve the electroconductivity, it is possible to increase stress to the non-electroconductive layer in drawing so as to reduce the stress to the electroconductive layer, so that crystallization of the electroconductive layer is suppressed. There are many factors which determine the stress, and one factor would be physical entanglement of molecules. As the intrinsic viscosity increases, the molecular weight increases, so that molecules are entangled more with each other, increasing the stress on a resin. That is, it is presumed that the intrinsic viscosity of the modified polyester in the non-electroconductive layer may be increased to suppress stress concentration on the electroconductive layer is suppressed, so that the electroconductivity of the electroconductive composite fiber can be improved.

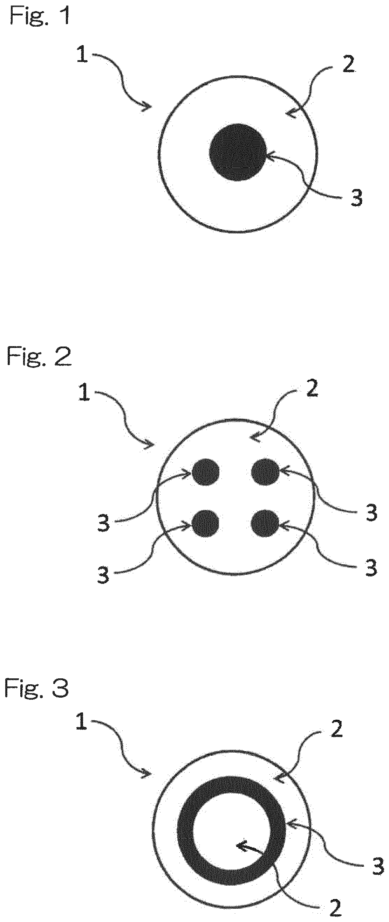

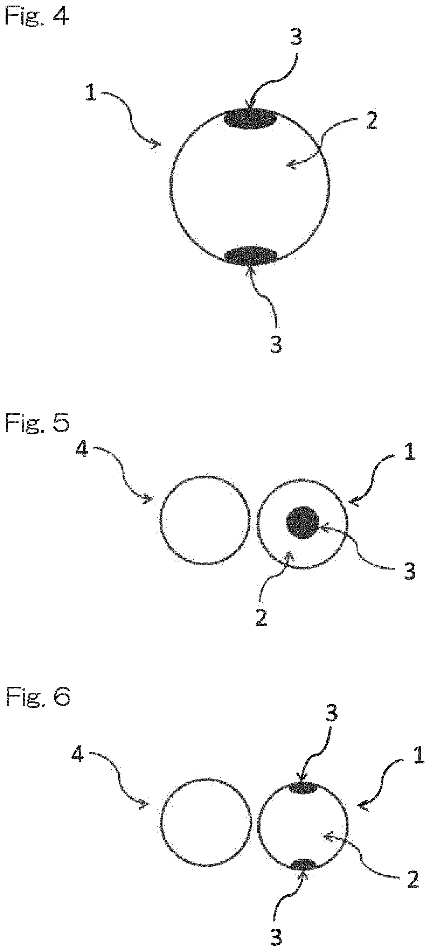

In the electroconductive composite fiber according to the present invention, the non-electroconductive layer may preferably cover at least 70% of a fiber surface area. The non-electroconductive layer may more preferably cover at least 90% of the fiber surface area, and the non-electroconductive layer further preferably cover the whole fiber surface area. Although it is desirable that the electroconductive layer is exposed on the fiber surface in terms of electroconductivity, if an exposed area of the electroconductive layer is too large, the electroconductive layer may be subjected to denaturation, deterioration, falling and the like during production and processing or in actual use, and may not be uniformly dyed. The composite shape of the electroconductive layer and the non-electroconductive layer is not limited to a particular shape, and may have a core-sheath cross section, or a sea-island cross section, or a side-by-side cross section (for example, see the cross sections in Fig. 1 to Fig. 6). Among them, it is preferable that the fiber has a cross section in which the non-electroconductive layer covers the whole fiber surface as shown in Fig. 1 to Fig. 3. In order to improve dyability, it is preferable to employ a cross-sectional design including mixed fibers as shown in Fig. 5, Fig. 6.

In the electroconductive composite fiber according to the present invention, it is only required that the electroconductive layer containing the electroconductive substance is disposed in contact with the non-electroconductive layer containing the modified polyester including the phosphonium-containing dicarboxylic acid component as a copolymerization component. The electroconductive composite fiber may include any other layer(s) than the electroconductive layer and the non-electroconductive layer. Examples of such a layer may include a layer which does not contain an electroconductive substance and is made of a thermoplastic resin, such as polyamide, polyester, polyolefin, and polycarbonate.

The transverse sectional shape of the electroconductive composite fiber according to the present invention is not limited to a particular one, and examples of the shape may include a round shape, an elliptical shape, a hexagonal shape, a pentagonal shape, a rectangular shape, a triangular shape, a star shape, a flat shape, a dogbone shape, a T shape, a V shape, a Y shape, and a flower shape. Among them, the electroconductive composite fiber may preferably have a circular transverse sectional shape in terms of spinnability.

The electroconductive composite fiber according to the present invention may preferably have a total fineness of from 10 to 50 dtex, and more preferably from 20 to 30 dtex. Where the total fineness is too high, the electroconductive threads may stand out when used in a woven fabric and thus may deteriorate the design. Where the total fineness too low, fiber breakage may occur frequently in production of a woven fabric. The single fiber fineness of the electroconductive composite fiber is not limited to a particular value and may preferably be in a range of from 2.0 to 10.0 dtex. The number of filaments in the electroconductive composite fiber is not limited to a particular value either and may preferably be in a range of from 1 to 25.

The electroconductive composite fiber according to the present invention has excellent antistatic capability and may have a resistance of $9.9 \times 10^7$ Ω/cm or lower, preferably $8.5 \times 10^7$ Ω/cm or lower, and more preferably $7.8 \times 10^7$ Ω/cm or lower. The resistance of the electroconductive composite fiber is determined by a method described later in the Examples.

A method of producing the electroconductive composite fiber according to the present invention may include a spinning process of melt-spinning an electroconductive layer material including a mixture of an electroconductive substance and a resin; a non-electroconductive layer material including a modified polyester including a phosphonium-containing dicarboxylic acid component as a copolymerization component; and as needed, a thermoplastic resin material which forms a layer other than the electroconductive layer and the non-electroconductive layer. In the spinning process, the electroconductive layer material, the non-electroconductive layer material, and the thermoplastic resin material as needed are molten using separate extruders and are spun through a spinneret using a typical melt spinning machine for composite spinning. The cross-sectional shape and diameter of a resultant fiber can be arbitrarily set by the shape and size of the spinneret.

In order to expose the electroconductive layer on the fiber surface or enclose the electroconductive layer in the fiber in a desired state, it is preferable to adjust a positional relation between an introduction hole for the electroconductive layer and an introduction hole for the non-electroconductive layer in a distribution plate inside the spinning machine, and/or to adjust a composite ratio of these materials. For example, the composite ratio of the electroconductive layer material to the non-electroconductive layer material may be adjusted depending on the electroconductive substance used. In terms of spinnability and electroconductivity, where an electroconductive carbon black is used as the electroconductive substance, a weight ratio of the electroconductive layer material to the non-electroconductive layer material (electroconductive layer material : non-electroconductive layer material) may fall within a range of from 0.5:99.5 to 10:90, preferably from 1:99 to 5:95, more preferably from 1.5:98.5 to 4:96, and further preferably from 2:98 to 3.5:96.5. Where inorganic particles (in particular, titanium oxide particles) coated with an electroconductive material are used as the electroconductive substance, a weight ratio of the electroconductive layer material to the non-electroconductive layer material (electroconductive layer material: non-electroconductive layer material) may fall within a range of from 3:97 to 50:50, preferably from 5:95 to 40:60, and more preferably from 10:90 to 30:70.

In the present invention, the non-electroconductive layer material is a modified polyester including a phosphonium-containing dicarboxylic acid component as a copolymerization component. Since such a modified polyester can have an increased intrinsic viscosity, the modified polyester has excellent fibro-genetic property and can be spun at a high speed, i.e., at a winding speed of from 2000 to 5000 m/min. In order to improve the spinnability and the electroconductivity of the electroconductive composite fiber, the modified polyester may preferably have an intrinsic viscosity of from 0.6 to 0.8, more preferably from 0.63 to 0.75, and further preferably from 0.65 to 0.7.

The method of producing the electroconductive composite fiber according to the present invention may further include a drawing process of drawing an undrawn fiber obtained in the spinning process. In the drawing process, an undrawn fiber which is wound once in the spinning process may be unwound and be drawn, or an undrawn fiber which is obtained in the spinning process and is not yet wound may be drawn directly after spinning. A known drawing method may be used, and it is preferable to perform drawing and heat processing using, for example, a heat bath, a hot steam blower, a roller heater, a tube heater, a contact type plate heater, a non-contact type plate heater, or the like. The heating temperature may vary depending on the thermal characteristics of the electroconductive layer material and the non-electroconductive layer material and, for example, may fall within a range of from 80 to 200°C. In order to further improve the drawability of the composite fiber, the non-electroconductive layer material may contain inorganic fine particles having an average particle diameter of 0.5 μm or smaller in a proportion of 5 wt% or lower.

Since the production method according to the present invention permits high-speed spinning at a winding speed of 2000 m/min or higher, the drawing process may be omitted (a drawing omit approach), and the electroconductive composite fiber may be wound at a high speed and be obtained as an undrawn fiber.

The electroconductive composite fiber according to the present invention may be applied, in various forms, to applications which require different antistatic capability. For example, the electroconductive composite fiber according to the present invention and a non-electroconductive fiber may be mixed to be used as mixed fibers (for example, mixed fibers having a cross-sectional shape as shown in Fig. 5, Fig. 6). A multifilament(s) or a spun yarn(s) capable of being dyed by dispersion dyeing and/or cationic dyeing may be incorporated as the non-electroconductive fiber(s), so that mixed fibers can be dyed in a single bath. The non-electroconductive fiber may preferably be made of a same modified polyester as that of the non-electroconductive layer of the electroconductive composite fiber in that they can be dyed to a same color. It should be noted that in the case where the mixed fibers are used, a core fiber(s) and a side fiber(s) are typically entangled so as not to be separated from each other, and the mixed fibers may be twisted after the fibers are entangled.

Methods for producing the mixed fibers may include: a method comprising spinning a plurality type of fibers as mixed fibers; and a method of mixing an electroconductive composite fiber(s) and a non-electroconductive fiber(s) as post-processing. In particular, in a case of spinning fibers as mixed fibers, an electroconductive composite fiber(s) and a non-electroconductive fiber(s) may be discharged through different holes in a spinneret and be bundled as the mixed fibers.

The mixed fibers may also preferably have a total fineness of from 10 to 50 dtex, and more preferably from 20 to 30 dtex, and a single fiber fineness of from 2.0 to 10.0 dtex. The number of filaments in the mixed fibers may preferably fall in a range of from 2 to 25, and half or more of the filaments may preferably be the non-electroconductive fibers in terms of dyability.

The electroconductive composite fiber according to the present invention may be suitably used for a fiber structure such as a woven fabric and a knit fabric. Where the electroconductive composite fiber is used in a woven fabric or a knit fabric, the electroconductive composite fiber may preferably incorporated at a frequency of one fiber per inch or per 2 inches as a part of warps and/or wefts in order to impart sufficient antistatic capability to the fiber structure. Such a fiber structure may include the electroconductive composite fibers according to the present invention in at least a part of the fiber structure and, for example, may be a mixed woven fabric including other fibers such as natural fibers, chemical fibers, synthetic fibers, or a woven fabric including mixed fibers as described above.

Such a fiber structure may be applied to a wide range of applications which are required to have antistatic capability, and may be applied to clothing products such as mufflers and sweaters in order to prevent discomfort due to electrostatic discharge. The fiber structure may further be used as dustproof clothing for use in cleanrooms which is required to have high antistatic capability in order to protect electronic devices and/or semiconductors, as well as antistatic workwear for workers in factories and chemical plants at risk for explosion due to electrostatic discharge, e.g., workers who work in chemical plants and operators who deal with chemicals. Further, the electroconductive composite fiber according to the present invention may be used as a part of a pile of an antistatic carpet.

EXAMPLES

Hereinafter, the present invention will be described in detail with reference to Examples. The Examples, however, are not intended to limit the present invention.

1. Electroconductive Composite Fiber

Synthesis of Modified Polyesters:

As monomers forming dicarboxylic acid components, were produced terephthalic acid (TA), tetrabutylphosphonium 3,5-di-($\beta$-hydroxyethoxycarbonyl) benzenesulfonate (BPIS), 5-sodium sulfoisophthalate (SIP; a type of metal sulfoisophthalate), 1,4-cyclohexanedicarboxylic acid (CHDA), and adipic acid (AD). Respective modified polyester resins having the compositions as recited in Table 1 were produced from the monomers for dicarboxylic acid components of the respective Examples and Comparative Examples as recited in Table 1 and ethylene glycol as a monomer forming a diol component via ester exchange reactions and polycondensation reactions.

Copolymerization Amount of Dicarboxylic Acid Component:

Each modified polyester resin was dissolved at a concentration of 0.5 g/L in a deuterated trifluoroacetic acid solvent, and a copolymerization amount of a dicarboxylic acid component was determined at 50°C using a 500MHz $^1$H-NMR device (nuclear magnetic resonance spectrometer LA-500, manufactured by JEOL Ltd.). The values in Table 1 represent the copolymerization amounts of the respective dicarboxylic acid components based on the total dicarboxylic acid components of the modified polyesters in mol%.

Intrinsic Viscosity ($\eta$):

After drying the thus-obtained modified polyester resin (140°C, 4 hours), approximately 100 mg of the resin was weighed and then added to 20 ml of a mixed solvent of phenol / 1,1,2,2-tetrachloroethane (1/1, weight ratio) to be dissolved at 120°C. An intrinsic viscosity of the resin was determined using an Ubbelohde viscometer in a thermostatic bath at 30°C.

Production of Electroconductive Composite Fiber:

An electroconductive composite fiber was produced in accordance with the following procedure. As an electroconductive (EC) layer material, was used either a mixture of titanium oxide particles ($TiO_2$) coated with an electroconductive material (antimony doped tin oxide) ("EC-210" available from Titan Kogyo, Ltd.; specific resistance: 3.0 $\Omega \cdot cm$; average particle size: 0.45 $\mu m$) and a low-molecular-weight polyethylene (LD-PE) ("Novatec HD HJ490" available from Japan Polyethylene Cooperation), or a mixture of an electroconductive carbon black (CB) ("furnace black type VULCAN XC72" available from Cabot Specialty Chemicals, Inc; specific resistance: 0.45 $\Omega \cdot$cm; average particle size: 0.03 $\mu$m) and nylon-6 (Ny-6) ("UBE nylon 1011FK" available from UBE INDUSTRIES, LTD.). As a non-electroconductive layer material, was used each of the modified polyesters obtained as above. Following the respective compositions in Table 1, the non-electroconductive layer material and the electroconductive layer material were molten in separate extruders and were discharged through a composite spinning nozzle at 255°C to obtain as-spun composite fibers having a core-sheath cross section as shown in Fig. 1. Next, the as-spun fibers discharged through a spinneret were cooled using a cooling air device which is 1.0-m long and a horizontally blowing type and then were continuously introduced into a tube heater (inner wall temperature: 150°C) which was installed at a position of 1.3 m from a point immediately below the spinneret and had a length of 1.0 m and an inner diameter of 30 mm for drawing the fibers in the tube heater. Then, a spinning oil was applied to the drawn fibers from the tube heater, and the oil-applied fibers were subsequently wound up using a roller at a winding speed of 3000 m/min to obtain electroconductive composite fibers having a total fineness of 22 dtex and including 4 filaments.

2. Evaluation of Physical Properties / Characteristics of Electroconductive Composite Fibers

Values of the respective physical properties of the fibers according to the Examples and Comparative Examples were determined in accordance with the following methods. Table 1 shows the results.

Spinnability:

Spinnability of the electroconductive composite fibers was evaluated in accordance with the following criteria in Examples 1 to 10 and Comparative Examples 1 to 6 when wound under the previously described condition:

Good: fiber breakage occurred 0 to 5 times within 12 hours,
Moderate: fiber breakage occurred 6 to 10 times within 12 hours,
Poor: fiber breakage occurred 11 times or more within 12 hours.
Electroconductivity (Resistance):

In accordance with the voltmeter-ammeter method, a direct current (DC) voltage of 1000 V was applied to a 10-cm sample of an electroconductive composite fiber (single fiber) which was set on parallel clip electrodes to determine a resistance ($\Omega$/cm) according to Ohm's law from the voltage and a current value flowing through the sample upon the application of the direct current. As a rough standard of resistance for obtaining high antistatic capability, a fiber may preferably have a resistance of $9.9 \times 10^7$ $\Omega$/cm or lower when measured in accordance with the above measurement method for applications such as highly antistatic cleanroom clothing to be worn in semiconductor manufacturing.

Method of Dyeing:

Using a circular knitting machine NCR-BL (cylinder diameter: 3.5 inches (8.9 cm); 27 gauge) manufactured by EIKO INDUSTRIAL CO,. LTD., a tubular knitted fabric of electroconductive composite fibers was fabricated. After the tubular knitted fabric was scoured, the tubular knitted fabric was subjected to dyeing and reduction cleaning under the following conditions to obtain a dyed sample.

(Cationic Dyeing)

Dye: Kayacryl Red GL-ED 2.0% owf
Auxiliary agent: $Na_2SO_4$ 10%, $CH_3COONa$ 0.5%, $CH_3COOH$ 50%
Bath ratio: 1:50
Dyeing temperature: 90°C
Time: 40 min

(Reduction Cleaning)

Sodium hydroxide: 1.0 g/L

Sodium hydrosulfite: 1.0 g/L
Amirazine D: 1.0 g/L
Bath ratio: 1/50
Reduction cleaning temperature: 80°C
Time: 20 min

Dyability (Dye Adhesion Concentration):

A reflectance R of a dyed knitted fabric sample obtained by the above dyeing method at a maximum absorption wavelength was measured using the following reflectance spectrometer, and a dye adhesion concentration (K/S) was calculated by Kubelka-Munk formula (1) below.
Reflectance spectrometer: spectrophotometer manufactured by Hitachi, Ltd. ("C-2000S Color Analyzer")

$$K/S = (1 - R)^2 / 2R \qquad (1)$$

[Table 1]

| | EC layer | | | Non-EC layer | | | | EC layer: non-EC layer (weight ratio) | Spinn-ability | Electroconductivity | Dyability |
| | Resin | EC substance | Content of EC substance (wt%) | Dicarboxylic acid component | | | intrinsic viscosity ($\eta$) | | | | |
| | | | | Copolymerization amount of TA component (mol%) | Modifying component | Copolymerization amount of modifying component (mol%) | | | | Resistance ($\Omega$/cm) | Dye adhesion conc. K/S |
| Ex. 1 | LD-PE | TiO$_2$ | 75 | 97.5 | BPIS | 2.5 | 0.69 | 20:80 | Good | $3.2\times10^7$ | 8.5 |
| Ex. 2 | LD-PE | TiO$_2$ | 65 | 97.5 | BPIS | 2.5 | 0.69 | 20:80 | Good | $8.1\times10^7$ | 9.2 |
| Ex. 3 | LD-PE | TiO$_2$ | 75 | 97.5 | BPIS | 2.5 | 0.69 | 10:90 | Good | $7.6\times10^7$ | 9.5 |
| Ex. 4 | LD-PE | TiO$_2$ | 75 | 97.5 | BPIS | 2.5 | 0.69 | 30:70 | Moderate | $2.1\times10^7$ | 7.8 |
| Ex. 5 | LD-PE | TiO$_2$ | 75 | 98.3 | BPIS | 1.7 | 0.69 | 20:80 | Good | $7.6\times10^7$ | 7.9 |
| Ex. 6 | LD-PE | TiO$_2$ | 75 | 87.5 | BPIS CHDA AD | 2.5 5.0 5.0 | 0.66 | 20:80 | Good | $5.8\times10^7$ | 8.9 |
| Ex. 7 | Nv-6 | CB | 35 | 97.5 | BPIS | 2.5 | 0.69 | 2.5:97.5 | Good | $9.5\times10^6$ | 8.0 |
| Ex. 8 | Ny-6 | CB | 30 | 97.5 | BPIS | 2.5 | 0.69 | 2.5:97.5 | Good | $3.3\times10^7$ | 8.5 |
| Ex. 9 | Ny-6 | CB | 35 | 97.5 | BPIS | 2.5 | 0.69 | 1:99 | Good | $2.4\times10^7$ | 10.1 |
| Ex. 10 | Ny-6 | CB | 35 | 97.5 | BPIS | 2.5 | 0.69 | 5:95 | Moderate | $6.0\times10^6$ | 7.4 |
| Com. Ex. 1 | LD-PE | TiO$_2$ | 75 | 98.3 | SIP | 1.7 | 0.58 | 20:80 | Poor | $5.5\times10^8$ | 8.2 |
| Com. Ex. 2 | LD-PE | TiO$_2$ | 65 | 98.3 | SIP | 1.7 | 0.58 | 20:80 | Poor | $5.6\times10^9$ | 8.9 |
| Com. Ex. 3 | LD-PE | TiO$_2$ | 75 | 97.5 | SIP | 2.5 | 0.56 | 20:80 | Poor | $3.1\times10^8$ | 8.6 |
| Com. Ex. 4 | Ny-6 | CB | 35 | 98.3 | SIP | 1.7 | 0.58 | 2.5:97.5 | Poor | $1.0\times10^8$ | 7.8 |
| Com. Ex. 5 | Ny-6 | CB | 30 | 98.3 | SIP | 1.7 | 0.58 | 2.5:97.5 | Poor | $9.4\times10^8$ | 8.3 |

EP 3 992 335 A1

(continued)

| | EC layer | | | Non-EC layer | | | intrinsic viscosity ($\eta$) | EC layer: non-EC layer (weight ratio) | Spinn-ability | Electroconductivity | Dyability |
| | Resin | EC substance | Content of EC substance (wt%) | Dicarboxylic acid component | | | | | | | |
| | | | | Copolymerization amount of TA component (mol%) | Modifying component | Copolymerization amount of modifying component (mol%) | | | | Resistance ($\Omega$/cm) | Dye adhesion conc. K/S |
| Com. Ex. 6 | Ny-6 | CB | 35 | 97.5 | SIP | 2.5 | 0.56 | 2.5:97.5 | Poor | $1.1\times10^8$ | 8.1 |

13

As shown in Table 1, it was found that where the electroconductive layer contained a low-density polyethylene (LD-PE) added with 75 wt% or 65 wt% of titanium oxide particles coated with an electroconductive material, Examples 1 to 6, which are the electroconductive composite fibers according to the present invention in which the non-electroconductive layer included the modified polyester including the dicarboxylic acid component containing a phosphonium sulfonate group(s) as a copolymerization component, exhibited not only excellent spinnability, but also had reduced resistance of the fibers and excellent electroconductivity, as compared with Comparative Examples 1 to 3 in which the non-electroconductive layer included the modified polyester including the dicarboxylic acid component containing a metal sulfonate group as a copolymerization component. Further, it was found that the electroconductive composite fibers of Examples 1 to 6 also had excellent dyeability. Similarly, it was found that where the electroconductive layer contained Ny-6 added with 35 wt% or 30 wt% of an electroconductive carbon black, Examples 7 to 10, which are the electroconductive composite fiber according to the present invention in which the non-electroconductive layer contained the modified polyester including the dicarboxylic acid component containing a phosphonium sulfonate group as a copolymerization component, exhibited excellent spinnability and electroconductivity as well as excellent dyeability, as compared with Comparative Examples 4 to 6 in which the non-electroconductive layer included the modified polyester including the dicarboxylic acid component containing a metal sulfonate group as a copolymerization component.

INDUSTRIAL APPLICABILITY

Because of excellent dyability and antistatic capability, the electroconductive composite fiber according to the present invention can be used as, for example, a fibric material for clothing products such as mufflers and sweaters in order to prevent discomfort due to electrostatic discharge. Further, because of particularly excellent antistatic capability, the electroconductive composite fiber can be used as a fibric material for applications which require high antistatic capability, such as dustproof clothing for use in cleanrooms where electronic devices and/or semiconductors are present, as well as antistatic workwear for workers in factories and chemical plants at risk for explosion due to electrostatic discharge, e.g., workers who work in chemical plants and operators who deal with chemicals. Further, the electroconductive composite fiber can be used as a part of a pile of an antistatic carpet.

Although the present invention has been described in terms of the preferred Examples thereof with reference to the drawings, those skilled in the art would readily arrive at various changes and modifications in view of the present specification without departing from the scope of the invention.

Accordingly, such changes and modifications are included within the scope of the present invention defined by the appended claims.

REFERENCE NUMERALS

1    electroconductive composite fiber
2    non-electroconductive layer
3    electroconductive layer
4    non-electroconductive fiber

**Claims**

1.  An electroconductive composite fiber at least comprising an electroconductive layer and a non-electroconductive layer disposed in contact with the electroconductive layer,

    wherein the electroconductive layer contains an electroconductive substance, and
    the non-electroconductive layer contains a modified polyester comprising a phosphonium-containing dicarboxylic acid component as a copolymerization component.

2.  The electroconductive composite fiber according to claim 1, wherein the copolymerization component of the modified polyester is a dicarboxylic acid component containing a phosphonium sulfonate group.

3.  The electroconductive composite fiber according to claim 2, wherein the copolymerization component of the modified polyester is a phosphonium sulfoisophthalate component.

4.  The electroconductive composite fiber according to any one of claims 1 to 3, wherein the modified polyester contains the phosphonium-containing dicarboxylic acid component as the copolymerization component in a proportion of from 1.0 to 3.5 mol% based on a total amount of all dicarboxylic acid components.

5. The electroconductive composite fiber according to any one of claims 1 to 4, wherein the modified polyester has an intrinsic viscosity of from 0.6 to 0.8.

6. The electroconductive composite fiber according to any one of claims 1 to 5, wherein the electroconductive substance is an electroconductive carbon black or titanium oxide particles which are coated with an electroconductive material.

7. The electroconductive composite fiber according to claim 6, wherein the electroconductive layer contains the electroconductive carbon black in a proportion of from 20 to 40 wt% and a thermoplastic resin, and
a weight ratio of the electroconductive layer to the non-electroconductive layer falls within a range of from 0.5:99.5 to 10:90.

8. The electroconductive composite fiber according to claim 6, wherein the electroconductive layer contains the titanium oxide particles which are coated with the electroconductive material in a proportion of from 30 to 85 wt% and a thermoplastic resin, and
a weight ratio of the electroconductive layer to the non-electroconductive layer falls within a range of from 3:97 to 50:50.

9. The electroconductive composite fiber according to any one of claims 6 to 8, wherein the electroconductive layer contains the electroconductive substance and a thermoplastic resin, and
the thermoplastic resin is a thermoplastic polyamide or a thermoplastic polyolefin.

10. A fiber structure comprising electroconductive composite fibers as recited in any one of claims 1 to 9 in at least a part of the fiber structure.

Fig. 1

Fig. 2

Fig. 3

Fig. 4

Fig. 5

Fig. 6

## INTERNATIONAL SEARCH REPORT

| | International application No. |
|---|---|
| | PCT/JP2020/022040 |

### A. CLASSIFICATION OF SUBJECT MATTER
D01F 8/14(2006.01)i
FI: D01F8/14 A

According to International Patent Classification (IPC) or to both national classification and IPC

### B. FIELDS SEARCHED

Minimum documentation searched (classification system followed by classification symbols)
D01F8/00-8/18, D03D1/00-27/18, D04B1/00-39/08, D04H1/00-18/04

| Documentation searched other than minimum documentation to the extent that such documents are included in the fields searched | |
|---|---|
| Published examined utility model applications of Japan | 1922–1996 |
| Published unexamined utility model applications of Japan | 1971–2020 |
| Registered utility model specifications of Japan | 1996–2020 |
| Published registered utility model applications of Japan | 1994–2020 |

Electronic data base consulted during the international search (name of data base and, where practicable, search terms used)
JSTPlus/JMEDPlus/JST7580 (JDreamIII)

### C. DOCUMENTS CONSIDERED TO BE RELEVANT

| Category* | Citation of document, with indication, where appropriate, of the relevant passages | Relevant to claim No. |
|---|---|---|
| X | JP 04-153319 A (TEIJIN LTD.) 26.05.1992 (1992-05-26) claims, examples | 1-5, 10 |
| Y | page 6, upper left column, line 12 to upper right column, line 9 | 1-10 |
| X | JP 2010-007191 A (TEIJIN FIBERS LTD.) 14.01.2010 (2010-01-14) claims, examples | 1-5, 10 |
| Y | JP 60-187542 A (KANEBO KABUSHIKI KAISHA) 25.09.1985 (1985-09-25) claims, page 5, lower right column, line 12 to page 6, upper left column, line 5, page 6, upper left column, line 12 to upper right column, line 9, example 1 | 1-10 |
| A | JP 2014-005578 A (KURARAY CO., LTD.) 16.01.2014 (2014-01-16) | 1-10 |
| A | JP 2011-021288 A (TEIJIN FIBERS LTD.) 03.02.2011 (2011-02-03) | 1-10 |

☐ Further documents are listed in the continuation of Box C.    ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 21 August 2020 (21.08.2020) | 01 September 2020 (01.09.2020) |

| Name and mailing address of the ISA/ | Authorized officer |
|---|---|
| Japan Patent Office<br>3-4-3, Kasumigaseki, Chiyoda-ku,<br>Tokyo 100-8915, Japan | |
| | Telephone No. |

Form PCT/ISA/210 (second sheet) (January 2015)

**INTERNATIONAL SEARCH REPORT**
Information on patent family members

International application No.

PCT/JP2020/022040

| Patent Documents referred in the Report | Publication Date | Patent Family | Publication Date |
|---|---|---|---|
| JP 04-153319 A | 26 May 1992 | (Family: none) | |
| JP 2010-007191 A | 14 Jan. 2010 | (Family: none) | |
| JP 60-187542 A | 25 Sep. 1985 | (Family: none) | |
| JP 2014-005578 A | 16 Jan. 2014 | (Family: none) | |
| JP 2011-021288 A | 03 Feb. 2011 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019119808 A
- JP H931747 A
- JP 2010059589 A